# EUROPEAN PATENT SPECIFICATION

(11) **EP 1 071 574 B1**
(45) Date of publication and mention of the grant of the patent: **24.03.2004**
(21) Application number: 99918115.9
(22) Date of filing: 20.04.1999
(51) Int. Cl.: B60N 2/28

(54) **IMPROVEMENTS IN CAR SEATS FOR CHILDREN**
VERBESSERUNGEN AN KINDERAUTOSITZEN
AMELIORATIONS APPORTES AUX SIEGES D'ENFANTS POUR VOITURES

(30) Priority: 20.04.1998 GB 9808322
(43) Date of publication of application: 31.01.2001
(73) Proprietor: Barker, Derrick, Near Pershore, Worcestershire WR10 2NB (GB)
(72) Inventor: BARKER, Derrick John Martin, Droitwich, Worcestershire WR9 8RA (GB)
(74) Representative: Brookes Batchellor
(86) International application number: PCT/GB1999/001199
(87) International publication number: WO 1999/054161

(56) References cited:
- EP-A- 0 770 515
- DE-A- 19 610 917
- DE-C- 4 343 867
- FR-A- 2 750 372

## Description

This invention relates to a safety seat of the type which may be used to retain a child safely during car travel. The invention is particularly, although not exclusively, concerned with a safety seat of the type which rests on a passenger seat of the vehicle during car travel, but may be removed from the vehicle and used to carry the child using a handle pivoted to the body of the seat. When in the vehicle, the seat may be arranged to face to the rear and be held in place by a car seat belt.

Known car safety seats intended for children suffer from disadvantages, particularly in connection with making adjustments to take account of increases in the size of the child using the seat.

In one known type of child's car safety seat, the back-rest of the seat is provided at each side with three slots arranged one above another. A child retention harness includes a pair of shoulder belts, each of which is passed through a slot at a height appropriate to the size of the child, initially through the lowest slot. The shoulder belts are connected by a releasable fastener to a lap or crotch belt which is taken out through an opening in the bottom of the seat and may be pulled through a clamp to tension the harness. As the child grows, the shoulder belts must be extracted from the lowest slots and threaded through slots at a higher level. This adjustment should not be made until the child's shoulders have reached the level of the next pair of slots, but in practice adjustment may be carried out prematurely or be delayed. This may increase the risk of injury to the child during a crash. It is clearly desirable for the system for adjusting the harness to be simplified, made easier to use, and ensure optimum positioning of the belts relative to the child's shoulders.

It is also desirable in a seat of this type for the tension in the harness to be relaxed slightly for comfort when the seat is removed from the car to carry the child, as it is then unnecessary to restrain the child quiet so firmly as during travel.

Patent Application EP-A-0 287 259 corresponds to the preamble of claim 1 and discloses a car safety seat including a system for adjusting a harness relative to the back-rest of the seat, wherein the back-rest is provided with a pair of upwardly extending slots through which shoulder belts of the harness extend, the positions at which the shoulder belts are made to pass through the slots being determined by guides capable of being made fast with the back rest. In EP-A-0 287 259 (Fig.7) the guides are formed by openings in two cross-pieces which may be moved vertically relative to the back-rest of the seat and fixed in place to position the guides at a desired height. A disadvantage of this arrangement is that the guides are not rotatable so that the shoulder belts remains horizontal with regard to the shoulders of the child. This arrangement fails to take into account the shape of the child's shoulders.

This problem is overcome by the features of claim 1, i.e. the guides are rotatable relative to the slots. In this way, it is achieved to enable the belts to make contact with the shoulders of the child at an optimum angle.

The seat may incorporate a system for relaxing the tension in the harness when the seat is removed from a vehicle, in which the belt passes over an adjustment member which has a first, tensioning position in which the belt is constrained to follow a longer path, and a second position in which the belt follows a shorter path, the adjustment member being made to occupy the first position when a car seat belt is used to retain the safety seat in a vehicle, and being free to move into the second position when the car seat belt is removed from engagement with the safety seat.

According to a further embodiment of the invention there is provided a safety seat having a contour adjuster comprising a panel pivotable from a position in which it spans a depression in the base of the seat to accommodate a smaller baby into a position overlying an adjacent portion of the seat to accommodate a larger baby or child.

This further embodiment of the invention may have utility in other types of seat used for babies and small children.

In the drawings:
Figure 1 is a perspective view of a car safety seat incorporating a first embodiment of harness adjustment system with the parts arranged for in-car use,
Figure 2 is a perspective view of parts of the harness adjustment system viewed from the front,
Figure 3 is a vertical section illustrating the harness adjustment system with the parts in three different positions,
Figure 4 is a view of the seat from the front and side, partly broken away, to show the paths taken by the harness belts,
Figure 4A shows a union bracket of the harness,
Figure 5 is a view similar to Figure 1 of a car safety seat incorporating a second embodiment of harness adjustment system as well as a comfort adjustment mechanism,
Figure 6 is an exploded perspective view of the parts of the second harness adjustment system, and comfort adjustment mechanism,
Figure 7 is a rear view of a cover or cowl forming part of the system shown in Figure 5,
Figure 8 is a front view of the locking plate of the system shown in Figure 5,
Figure 9 is a side view of the locking plate taken along its axis,
Figure 10 is a section through the cowl and locking plate taken on the line 10-10 in Figures 7 and 8,
Figure 11 is a section through part of a comfort cam follower of the system shown in Figure 5,
Figure 12 shows the locking plate in a relaxed position relative to the cowl,
Figure 13 shows the locking plate in a disengaged position,
Figure 14 is a diagrammatic side view of the seat to show a contour adjustment flap in a position for larger babies,
Figure 15 is a view similar to Figure 15 but showing the contour adjustment flap positioned for smaller babies,
Figure 16 shows the path followed by the belt through the contour adjustment flap and the manner of fixing the latter.

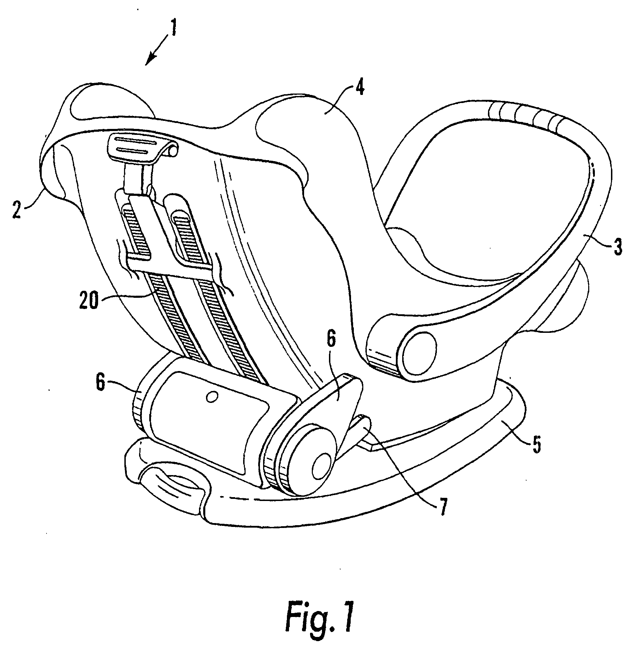

Referring to Figure 1, a child's car safety seat comprises a shell 1 which may be injection moulded from a suitable polymer and padded and covered in fabric on its inner side. The shell has a surrounding rim 2 to which is pivoted a handle 3 shown in its forward position and capable of being moved rearwardly into a substantially upright carrying position, and then further rearwardly into a stowed position in contact with the part of the rim indicated at 4. Herein, unless the context otherwise requires, references to forward and rearward directions relate to the direction in which the child faces. In its forward position the handle braces the child's car safety seat (which faces rearwardly) against the back of the passenger seat on which it is supported. The seat is prevented from sliding off the seat by the conventional car seat belt which is looped around the back rest of the child's seat.

The shell is supported on the base by a parallelogram linkage comprising arms 6 and 7. The arms 6 are biased in the counter-clockwise direction as viewed in Figure 1 so that the shell is resiliently supported relative to the base for a swinging or bouncing movement. Latches associated with the arms 6 serve to lock the shell to the base and prevent such movement when the arm is moved into its rearward, stowed position.

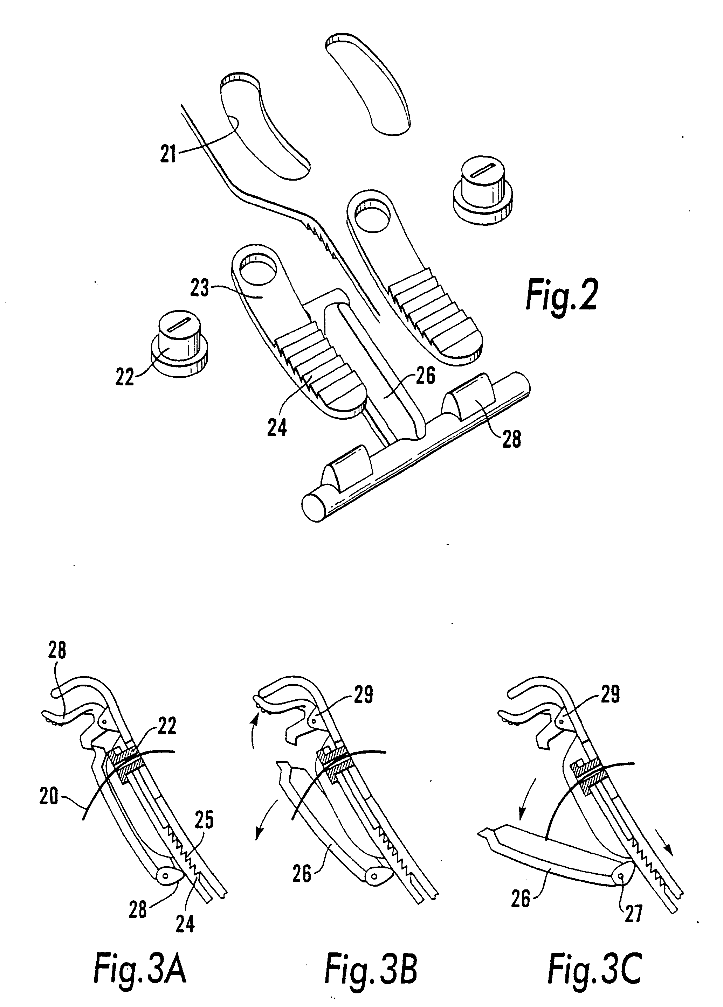

Referring now also to Figures 2, 3 and 4 the seat is provided with a harness including a pair of parallel shoulder belts 20 which extend through openings in the back rest and are linked to a crotch or lap belt 20a which passes through an opening in the bottom portion of the seat shell. A problem with seats of this type is that the position at which the shoulder belts are arranged to pass through the back rest portion must allow for vertical adjustment in order to accommodate children of different heights.

In accordance with the present invention, the back rest has a pair of laterally spaced, generally vertically extending slots 21. The slots diverge in the upward direction to take into account the fact that the neck of the child increases with height. Associated with each slot is a guide 22 through which a respective belt passes. The guide is in the form of a plug and is received in a locking member or plate 23. The guide may rotate relative to the locking plate so that the belt extends from the back-rest at an optimum angle. The plate 23 is formed with ratchet teeth 24 for cooperation with a rack including complementary teeth 25 formed on the rear surface of the shell or on a part fast with the shell. A pressure member in the form of a lever 26 extends from a rod 27 journalled at its ends in bearings fast with the shell. Cam members 28 are formed on the shaft. With the lever in the position shown in Figure 3A the cam members press both locking plates into engagement with the teeth 25 so as to secure the locking plate and harness guide in place. A latch 28 pivoted to the shell at 29 cooperates with the lever to hold it in this position. Raising the latch as shown in Figure 3B allows the lever to fall into the position shown in Figure 3C and release the locking plates which may then be adjusted vertically, and re-secured by raising the lever and latching it. The level of the shoulder belts relative to the back-rest may be infinitely adjusted as the child grows, so that it is possible to ensure that the belts emerge from the back-rest at the level of the shoulders. Moreover, because the slots 21 diverge, and the guides 22 may rotate, the belts are positioned at an optimum spacing and orientation relative to the shoulders, so as to hold the child safely in a crash condition.

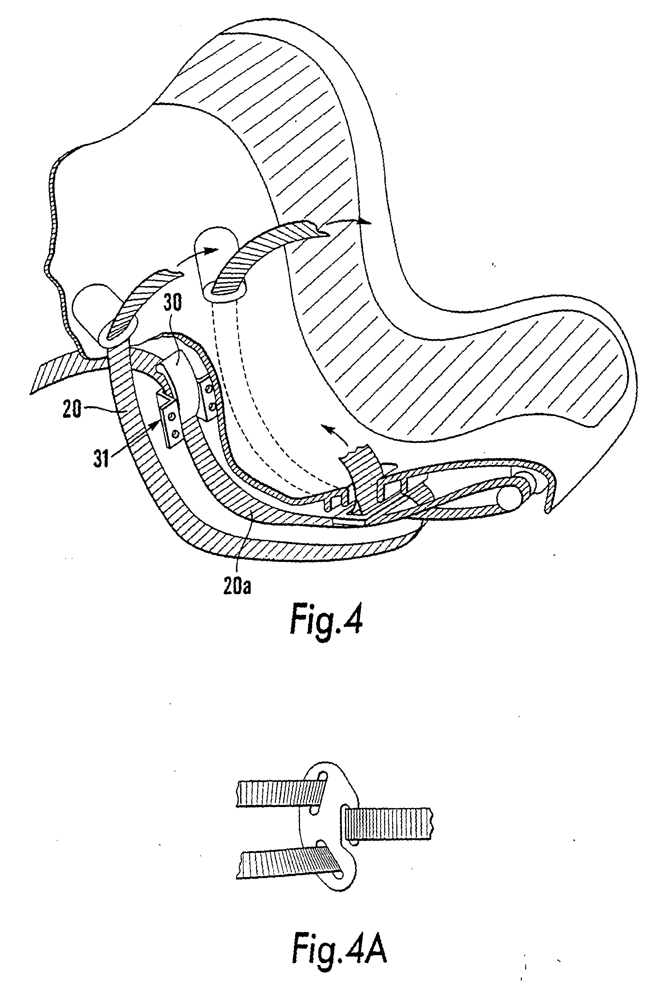

The courses followed by the shoulder belts 20 and crotch or lap belts 20a are shown in Figure 4, with a union bracket which may be used to connect them being shown in Figure 4A. The crotch or lap belt may be tensioned and held tight by a clamp 30 pivoted in brackets 31 on the rearside of the back rest.

The seat may be rotated from the position shown in Figure 1 through an angle of 90° for the purpose of seating or removing a child. To perform this movement, the handle must be placed in the stowed position. In this position a latch cooperates with a part on the handle to secure the shell against swinging on the linkage. When the seat is turned into its travel position and the handle moved forwards to brace the seat the latch is released and the seat is free to swing.

The seat described above is secured in position on a passenger seat of a vehicle with the child facing rearwards using a conventional seat belt which is secured to a fitting on the back of the shell. The system for adjusting the harness described above may be incorporated into forward facing safety seats. The seat to be described with reference to the remaining figures of the drawings uses the fitting which receives the conventional seat belt to operate a comfort adjustment mechanism of a rearward facing safety seat shortly to be described.

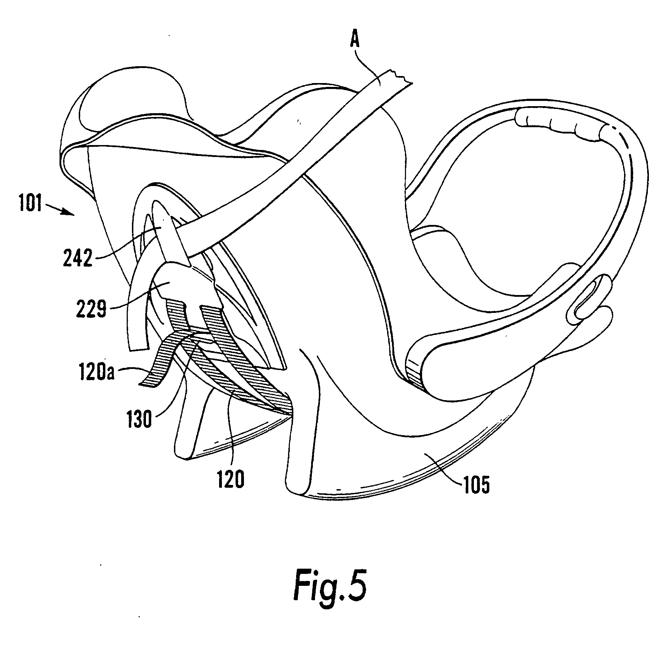

Referring now to Figure 5, the child's car safety seat shown therein has a simpler base construction. The seat shell 101 incorporates a pair of forwardly extending support ribs 105 on which the seat may rest, and between which pass the parallel belts 120, 120a of the harness. The shoulder belts 120 are connected at their forward ends to the crotch or lap belt 120a which is passed back between the belts 120 and through a clamp 130 to allow the harness to be tensioned. The arrangement of the belts is generally as shown in Figure 4. The harness adjustment system incorporates a comfort adjustment mechanism in accordance with a second embodiment of the invention. The comfort adjustment mechanism may be used in seats which utilise other systems for adjusting the harness. The conventional seat belt A of the vehicle is used both to retain the child's safety seat in position and also secure the harness in its desired position with a tension appropriate to in-car use. When the seat belt A is disengaged, tension in the shoulder belts 120 of the harness is relaxed and their adjustment made possible.

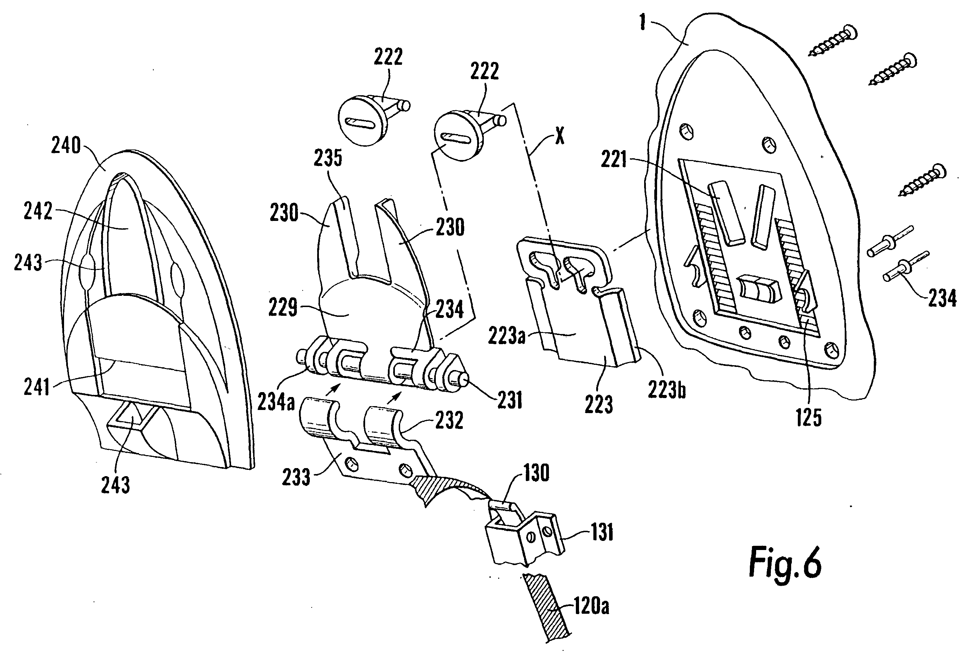

Fundamentally, the harness adjustment system of the seat shown in Figure 5 corresponds to that of Figure 2, and is depicted in an exploded view in Figure 6. As before, the rear side of the back-rest is provided with a pair of toothed racks, indicated at 125, formed on a plate rivetted to the back-rest. Generally vertically extending and diverging slots 221 pass through the plate and the back- rest.

Guides in the form of plugs 222 are slidable in the slots 221 and are retained rotatably in openings in a single locking member or plate 223 having holes into which the plugs 222 are fitted. The central part 223a of the locking plate is rigid and edge portions 223b are resilient, being biased away from the racks 125. The plugs have nibs and the holes are so shaped that the plugs may be inserted and rotated into positions from which they cannot become detached from the locking plate. This construction therefore also possesses the advantages of minimal incremental adjustment and optimum spacing and orientation of the belts. The locking plate has formations along both vertical side portions 223b to cooperate with the rack 125.

A pressure member or plate 229 is mounted on a spindle 231 provided with cam surfaces 234 indicated in Figure a. Certain of these cam surfaces are positioned to bear on the central part 223a of the locking plate 223, whilst others bear on concavely shaped bearing surfaces 232 of a support 233, referred to herein as the comfort cam follower, and complementary bearing surfaces on the back-rest engage the spindle. The comfort cam follower 233 is secured to the shell 1 by pop rivets 234.

The spindle 231 is also provided with further cams 234a positioned to make contact with the edge portions 223b of the locking plate.

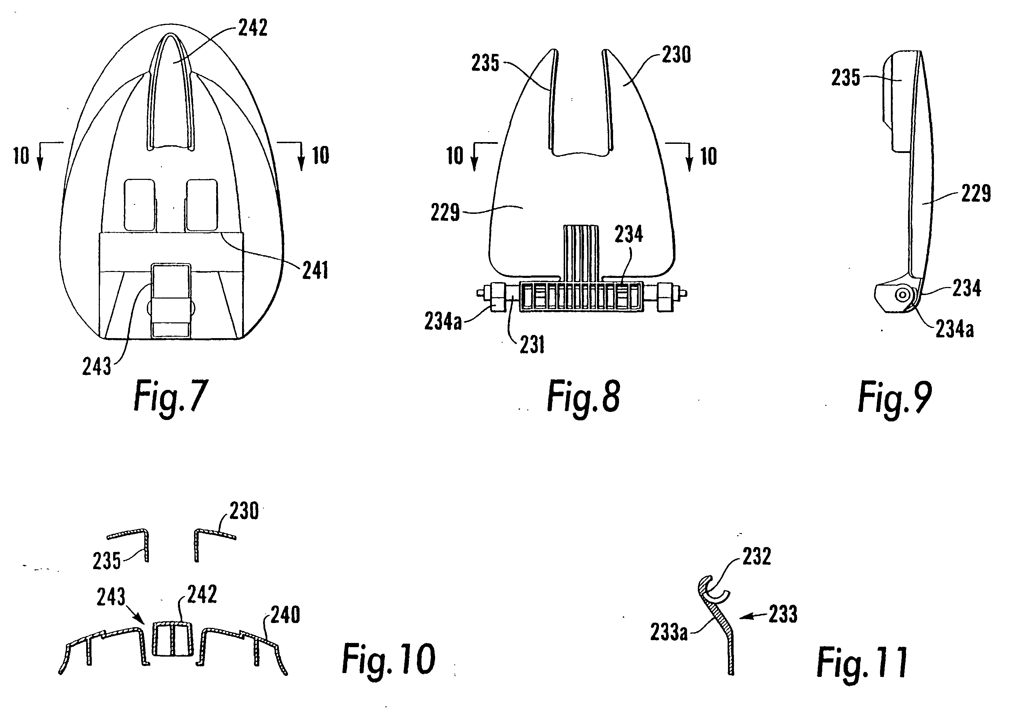

The comfort cam follower includes a rearwardly directed arm 233a shown in Figure 11 which is capable of flexing to allow the bearing surfaces to move through about 15°. The bearing surfaces of the comfort cam follower and the cams 234a of the pressure plate which cooperate therewith are so shaped that the comfort cam follower is made to move upwards as it swings forwards towards the back rest of the seat upon rotation of the pressure plate.

The outer surface of the curved parts 232 of the comfort cam follower serves to support and guide the shoulder belts immediately before they pass through the guides 222. As the pressure plate moves forwards into an advanced position, the comfort cam follower moves upwards and the path X followed by the belts is lengthened to increase the tension in them, and vice versa. The comfort cam follower thereby serves as an adjustment member 233 for the belt.

A cover or cowl 240 overlies the mechanism described above and has a transverse slot 241 through which the pressure plate 223 extends (the bearing for the pressure plate journals being located between the cowl and the seat shell, but the fingers 230 being located rearwardly of the cowl). The cowl includes a finger 242, around the sides and upper extremity of which is a slot 243. The fingers 230 have forwardly projecting flanges 235 which may pass through the slot, one on each side of the finger 242. The flanges 235 are cut back near their roots. The cowl has a receptacle 243 into which fit the brackets 131 of the clamp 130, the receptacle having an opening to allow passage of the end of the crotch or lap belt 120a where it emerges from the clamp.

When the seat belt A is threaded between the fingers 230 and 242, as shown in Figure 5, the fingers 230 are pressed forwards and the pressure plate rotated in the clockwise direction as viewed in Figure 6. The cams 234 on the pressure plate spindle cause the comfort cam follower to rise into its advanced position and tension the shoulder belts around a child in the seat. The flanges 235 on the fingers 230 prevent the seat belt A being inserted behind all three fingers and failing to actuate the mechanism to tension the belt around the child.

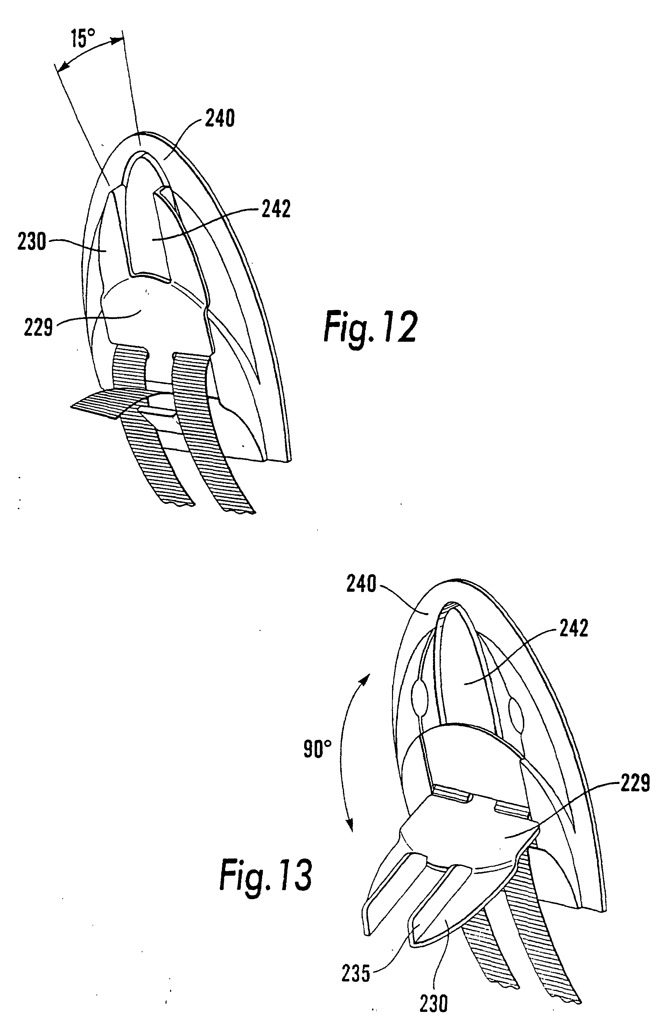

When the seat belt A is slipped between the fingers 230, 242 it is retained within the cut-outs at the root of the fingers 230. when the belt is removed, the pressure plate 239 may move rearwards through about 15° as shown in Figure 12. The cams 234 on the pressure plate spindle cause the comfort cam follower to move rearwards and downwards into its retracted position, thereby allowing relaxation of the shoulder belts passing over the cam. With the seat belt A removed, the pressure plate may be made to pivot down through 90° as shown in Figure 13. The cam surface 234a allows the edge portions of the locking plate to resile and disengage from the racks. The cam surfaces 234 bearing on the central part 223a of the locking plate rotate into a position in which the force applied to the locking plate is reduced. The plate is held in position but may be moved by hand into a new position against the resistance provided by cam 234.

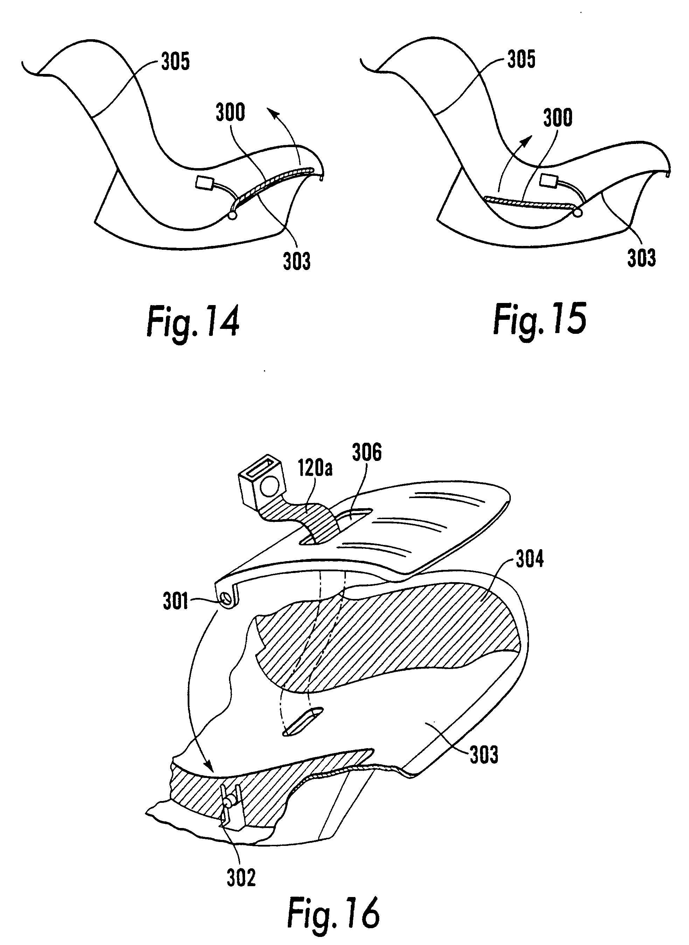

As shown in Figures 14 to 16, a contour adjustment device includes a panel 300 of semi-rigid plastics covered in the same fabric as is used to cover the seat shell. The panel has lugs 301 which fit over studs located within recesses formed between the base 303 and sides 304 of the shell. The panel is movable about its pivots as indicated by the arrows between the positions shown in Figures 14 and 15. In the latter position the panel bridges over the depression between the seat bottom 303 and the back-rest 305, so as to allow a very small baby to lie more-or-less flat in the seat. In the position shown in Figure 14, the panel overlies the forward part of the seat bottom, so that a larger child may sit normally in the seat.

The panel has an opening 306 through which the crotch or lap belt 120a may be passed in the position shown in Figure 14. When the panel is in the Figure 15 position, the belt 120a passes directly through the opening in the seat bottom.

Modifications may be made to the embodiments described above. Although it is preferred for the locking plates to engage with toothed racks, other formations capable of securing the belt guides in place may be employed. Although a pair of racks (or other formations) is preferred, a single one between the slots 221 may be used instead. Conceivably the pressure plate may have a single finger disposed between a pair of fingers on the cowl, or other arrangements employed to enable the seat belt A to press the locking plate 229 forwards.

## Claims

1. A car safety seat for a child including a system for adjusting a harness relative to the back-rest of the seat, wherein the back-rest is provided with a pair of upwardly extending slots (21, 221) through which shoulder belts (20, 120) of the harness extend, the positions at which the shoulder belts pass through the slots (21, 221) being determined by guides (22, 222), the guides being movable relative to the slots and capable of being made fast with the back-rest to take account of the size of the child, wherein the slots (21, 221) diverge in an upward direction, **characterised in that** said guides (22, 222) are rotatable relative to said slots (21, 221) in order to be positioned at an optimum orientation relative to the shoulders of the child.

2. A seat as claimed in claim 1, wherein the back-rest of the seat is associated with upwardly extending toothed racks (25, 125) wherein each guide (22, 222) may be made fast with the back-rest by a locking member (23, 223) engageable with a respective rack; at least one pressure member (26, 229) having an engaged position in which the locking member is held in engagement with the rack, and a released position in which the locking member is free to move relative to the rack.

3. A seat as claimed in claim 2, wherein the back-rest is associated with a pair of laterally spaced racks (125), a single locking member (223) provided with both guides (222) having formations to engage with both racks.

4. A seat as claimed in claim 2, wherein the back-rest is associated with a pair of laterally spaced racks (25), and each guide is associated with a respective locking member (23) with formations to engage a respective rack.

5. A seat as claimed in claim 3, wherein the locking member (223) is concealed within a cover (240).

6. A seat as claimed in any preceding claim, wherein the shoulder belts pass over an adjustment member (233) which has a first position in which the belts are constrained to follow a longer path and are tensioned, and a second position in which the belts follow a shorter path and are relatively relaxed, the adjustment member (233) being made to occupy the first position when a conventional car seat belt is used to retain the safety seat in a vehicle, and being free to move into the second position when the car seat belt is removed from the safety seat.

7. A seat as claimed in claim 6 wherein the first and second parts having fingers (230, 242) between which may be passed a conventional car seat belt, so as to urge the adjustment member (233) into its first position.

8. A seat as claimed in any one of claims 2 to 7, wherein the guides (222) consist of plugs rotatably received in holes in the locking member (223)

## Patentansprüche

1. Autosicherheitssitz für ein Kind, enthaltend ein System zum Einstellen eines Geschirrs relativ zur Rückenlehne des Sitzes, worin die Rückenlehne mit einem Paar sich aufwärts erstreckender Schlitze (21, 221) verstehen ist, durch die sich Schultergurte (20, 120) des Geschirrs erstrecken, wobei die Positionen, an denen die Schultergurte durch die Schlitze (21, 221) hindurchtreten, durch Führungen (22, 222) bestimmt sind, wobei die Führungen relativ zu den Schlitzen bewegbar sind und in der Lage sind, mit der Rückenlehne festgelegt zu werden, um die Größe des Kinds zu berücksichtigen, worin die Schlitze (21, 221) in einer Aufwärtsrichtung divergieren,
**dadurch gekennzeichnet, dass** die Führungen (22, 222) relativ zu den Schlitzen (21, 221) drehbar sind, um in einer optimalen Orientierung relativ zu den Schultern des Kinds positioniert zu werden.

2. Sitz nach Anspruch 1, worin die Rückenlehne des Sitzes sich aufwärts erstreckenden Zahnstangen (25, 125) zugeordnet ist, worin jede Führung (22, 222) mit der Rückenlehne durch ein mit einer entsprechenden Zahnstange in Eingriff bringbares Sperrelement (23, 223) festlegbar ist; wobei zumindest ein Druckelement (26, 229) eine Eingriffsstellung hat, in der das Sperrelement in Eingriff mit der Zahnstange gehalten wird, sowie eine Lösestellung, in der das Sperrelement relativ zu der Zahnstange frei beweglich ist.

3. Sitz nach Anspruch 2, worin die Rückenlehne einem Paar von mit Seitenabstand angeordneten Zahnstangen (125) zugeordnet ist, wobei ein einzelnes Sperrelement (223) mit beiden Führungen (222) versehen ist, die Formationen zum Eingriff mit beiden Zahnstangen aufweisen.

4. Sitz nach Anspruch 2, worin die Rückenlehne einem Paar mit seitlichem Abstand angeordneter Zahnstangen (25) zugeordnet ist und jede Führung einem entsprechenden Sperrelement (23) mit Formationen zum Eingriff einer entsprechenden Zahnstange zugeordnet ist.

5. Sitz nach Anspruch 3, worin das Sperrelement (223) innerhalb einer Abdeckung (240) verdeckt ist.

6. Sitz nach einem der vorhergehenden Ansprüche, worin die Schultergurte über ein Einstellelement (233) hinweglaufen, das eine erste Stellung aufweist, in der die Gurte so eingegrenzt sind, dass sie einem längeren Weg folgen und gespannt sind, sowie einer zweiten Stellung, in der die Gurte einem kürzeren Weg folgen und relativ entspannt sind, wobei das Einstellelement (233) ausgebildet ist, um die erste Stellung einzunehmen, wenn ein konventioneller Autosicherheitsgurt verwendet wird, um den Sicherheitssitz in einem Fahrzeug zurückzuhalten, und in die zweite Stellung frei beweglich ist, wenn der Autosicherheitsgurt von dem Sicherheitssitz entfernt wird.

7. Sitz nach Anspruch 6, worin der erste und der zweite Teil Finger (230, 242) aufweisen, zwischen denen ein konventioneller Autosicherheitsgurt hindurchtreten kann, um das Einstellelement (233) in seine erste Stellung zu drücken.

8. Sitz nach einem der Ansprüche 2 bis 7, worin die Führungen (222) aus Stopfen bestehen, die in Löchern in dem Sperrelement (223) drehbar aufgenommen sind.

## Revendications

1. Siège de sécurité automobile pour un enfant comprenant un système pour régler une sangle par rapport au dossier rembourré du siège, dans lequel le dossier rembourré est pourvu d'une paire de fentes (21, 221) s'étendant vers le haut à travers lesquelles les ceintures de sécurité (20, 120) de la sangle s'étendent, les positions auxquelles les ceintures de sécurité traversent les fentes (21, 221) étant déterminées par des guides (22, 222), les guides étant amovibles par rapport aux fentes et pouvant être réglables par rapport au dossier rembourré pour prendre en compte la taille de l'enfant, dans lequel les fentes (21, 221) divergent dans une direction vers le haut, **caractérisé en ce que** lesdits guides (22, 222) sont rotatifs par rapport auxdites fentes (21, 221) afin d'être positionnés selon une orientation optimale par rapport aux épaules de l'enfant.

2. Siège selon la revendication 1, dans lequel le dossier rembourré du siège est associé à des crémaillères (25, 125) s'étendant vers le haut dans lesquelles chaque guide (22, 222) peut être réglé par rapport au dossier rembourré à l'aide d'un élément de blocage (23, 223) qui s'engage avec une crémaillère respective ; au moins un élément de pression (26, 229) présentant une position engagée dans laquelle l'élément de blocage est maintenu en engagement avec la crémaillère, et une position relâchée dans laquelle l'élément de blocage est libre de tout mouvement par rapport à la crémaillère.

3. Siège selon la revendication 2, dans lequel le dossier rembourré est associé à une paire de crémaillères (125) espacées latéralement, un élément de blocage (223) simple prévu avec les deux guides (222) présentant des formations pour s'engager avec les deux crémaillères.

4. Siège selon la revendication 2, dans lequel le dossier rembourré est associé à une paire de crémaillères (25) espacées latéralement, et chaque guide est associé à un élément de blocage (23) respectif avec des formations pour s'engager avec une crémaillère respective.

5. Siège selon la revendication 3, dans lequel l'élément de blocage (223) est dissimulé par un capot (240).

6. Siège selon l'une quelconque des revendications précédentes, dans lequel les ceintures de sécurité passent sur un élément de réglage (233) qui présente une première position dans laquelle les ceintures doivent suivre une trajectoire plus longue et sont tendues, et une seconde position dans laquelle les ceintures suivent une trajectoire plus courte et sont relativement relâchées, l'élément de réglage (233) étant prévu pour se trouver dans la première position lorsqu'une ceinture de siège automobile conventionnelle est utilisée pour retenir le siège de sécurité dans un véhicule, et étant libre de tout mouvement dans la seconde position lorsque la ceinture du siège automobile est retirée du siège de sécurité.

7. Siège selon la revendication 6, dans lequel les première et seconde parties comprennent des pattes (230, 242) entre lesquelles une ceinture de siège automobile conventionnelle peut être passée, afin de positionner l'élément de réglage (233) dans sa première position.

8. Siège selon l'une quelconque des revendications 2 à 7, dans lequel les guides (222) consistent en des plaques reçues de manière rotative dans des orifices de l'élément de blocage (223).
